# EUROPÄISCHE PATENTSCHRIFT

(11) **EP 4 580 825 B1**
(45) Veröffentlichungstag und Bekanntmachung des Hinweises auf die Patenterteilung: **30.09.2026**
(21) Anmeldenummer: 23768118.4
(22) Anmeldetag: 30.08.2023
(51) Int. Cl.: B23C 5/08, B23C 5/22

(54) **SCHNEIDWERKZEUG MIT EINEM SCHNEIDEINSATZ**
CUTTING TOOL WITH A CUTTING INSERT
OUTIL DE COUPE AVEC INSERT DE COUPE

(30) Priorität: 30.08.2022 AT 506592022
(43) Veröffentlichungstag der Anmeldung: 09.07.2025
(73) Patentinhaber: MATE GmbH, 4656 Kirchham bei Vorchdorf (AT)
(72) Erfinder: KUBIN, Wilhelm, 4656 Kirchham bei Vorchdorf (AT)
(74) Vertreter: Burger, Hannes Alfred
(86) Internationale Anmeldenummer: PCT/AT2023/060294
(87) Internationale Veröffentlichungsnummer: WO 2024/044804

(56) Entgegenhaltungen:
- EP-A1- 2 764 939
- EP-A1- 2 990 149
- WO-A1-2012/003876
- GB-A- 2 057 940
- US-A1- 2020 254 540

## Beschreibung

Die Erfindung betrifft ein Schneidwerkzeug, insbesondere Scheibenfräser, wobei das Schneidwerkzeug einen scheibenförmigen Basiskörper aufweist, umfassend;
- zumindest einen über einen Umfang des Basiskörpers angeordneten Montagesitz, wobei der Montagesitz eine Anlagefläche und eine Sitzfläche mit einem darin aufgenommenen Schneideinsatz aufweist;
- der Schneideinsatz, umfassend:
   - eine Montagebohrung zur Aufnahme eines Befestigungsmittels (zur Befestigung des Schneideinsatzes); und
   - eine vordere Fläche sowie eine genüberliegende hintere Fläche, wobei die vordere Fläche zumindest eine Schneidkante aufweist und die hintere Fläche zur Anlage an der Anlagefläche (und zur Übertragung von Schneidkräften in den Montagesitz in einem befestigten Zustand des Schneideinsatzes) ausgebildet ist, und
   - eine erste Montagefläche, wobei sich die erste Montagefläche zwischen der vorderen Fläche und der hinteren Fläche erstreckt und zur Anlage an der Sitzfläche ausgebildet ist und wobei eine erste Ausnehmung in der ersten Montagefläche ausgebildet ist;
   wobei an dem Montagesitz eine Erhebung an der Sitzfläche ausgebildet ist und die Erhebung zum formschlüssigen Eingriff in die Ausnehmung ausgebildet ist

Auswechselbare Schneideinsätze sind aus dem Stand der Technik bekannt und weit verbreitet. Vorrangig sind diese oftmals als Verschleißteile vorgesehen und sind nach dementsprechender Abnützung auszutauschen.

Ein Schneideinsatz ist beispielsweise aus der WO2015017874 A1 bekannt, welcher eine Vorderseite mit einer Spanfläche aufweist und eine der Vorderseite gegenüberliegende Rückseite, die zumindest in einem Bereich als eine erste Anlagefläche ausgebildet ist, wobei die Rückseite ein satteldachförmiges Profil mit einer ersten Anlageflanke, einer zweiten Anlageflanke, die über einen Firstabschnitt verbunden sind, sowie ein Durchgangsloch, das den Schneideinsatz durchdringt, zur Aufnahme einer Befestigungsschraube.

Ein weiterer Schneideinsatz ist aus der EP1827744 B1 bekannt, bei welchem eine obere Fläche eine Spanfläche aufweist und eine vordere Fläche eine Freifläche aufweist und zwischen der Spanfläche und der vorderen Fläche eine Schneidkante ausgebildet ist. Eine untere Fläche und eine hintere Fläche sind V-förmig ausgebildet, wobei die Flächen zur Anlage an einen Einsatzhalter vorgesehen sind, welcher ebenfalls eine komplementäre Form aufweist. Weiters weist der Einsatz eine Durchgangsbohrung auf, die zwischen der vorderen und der hinteren Fläche erstreckt und zur Aufnahme einer Schraube oder dergleichen und zur Befestigung des Schneideinsatzes vorgesehen ist.

Ein Nachteil dieser Ausführungsformen besteht darin, dass bei Schräglagen des Werkzeuges oder bei einem nicht ruhigen Stand des Werkzeuges gegenüber seiner Umgebung die Schneideinsätze bei deren Einsetzen vor dem Befestigen wieder selbsttätig lösen können oder herausgleiten, bzw. aus der vorgesehenen Position bewegen oder verwackeln, was deren Montage komplexer gestaltet.

Die EP2990149 A1 offenbart einen Schneideinsatz für einen Zahnfräser, mit einem Einsatzkörper mit einer Längsachse und einen ersten Hauptflächenabschnitt und einen zweiten Hauptflächenabschnitt die sich in Längsrichtung auf entgegengesetzten Flächen des Einsatzkörpers erstrecken, sowie einen ersten und zweiten Spanflächenabschnitt, die sich in der Längsrichtung auf entgegengesetzten Flächen erstrecken. Ferner umfasst dieser einen ersten und zweiten Nebenflächenabschnitt , die sich quer zur Längsachse auf entgegengesetzten Flächen des Schneidkörpers erstrecken, und vier gekrümmte Schneidkanten die sich jeweils entlang eines Randabschnittes erstrecken, der an der Schnittlinie zwischen dem ersten oder zweiten Spanflächenabschnitt und dem ersten oder zweiten Hauptflächenabschnitt gebildet wird, und sich in den ersten oder zweiten Nebenflächenabschnitt fortsetzt, wobei jede gekrümmte Schneidkante einen Zahnflankenschneidabschnitt und einen Zahngrundschneidabschnitt aufweist.

Die GB2057940 A offenbart ein Schneidwerkzeug in Form eines rotierenden Fräsers, mit umfänglich angeordneten Schneideinsätzen, welche jeweils in einer Halterausnehmung durch einen in einer Bohrung platzierten Spannbolzen befestigt sind. Der Schneideinsatz umfasst eine durchgängige Nut, mittels welcher dieser an eine Längsrippe der Halterausnehmung aufgesetzt werden kann. Ferner ist die Bohrung zur Aufnahme des Spannbolzens geneigt ausgebildet, sodass dieser den Schneideinsatz fixiert.

Die US2020254540 A1 offenbart einen um eine Werkzeugachse drehbaren Schneidkörper mit mindestens eine Einsatzaufnahmetasche, die an einem axialen vorderen Ende des Schneidkörpers vorgesehen ist, wobei die Einsatzaufnahmetasche eine Sitzfläche und eine Gewindebohrung aufweist, sowie eine radial nach außen weisen-de Taschenwand quer zur Sitzfläche, die einen von der Sitzfläche beabstandeten Wandrand aufweist, sowie eine erste Ebene die tangential zu der Wandkante und senkrecht zu der Sitzfläche verläuft und das axial vordere Ende des Schneidkörpers schneidet.

Ferner umfasst dieser männliche und/oder weibliche Anschlagelemente, die mit der Sitzfläche verbunden sind und ein axiales Anschlagelement mit einer axial nach vorne gerichteten Anschlagfläche mit einer axialen Anschlagkante aufweisen, sowie mindestens ein radiales Anschlagelement mit einer radial nach innen ge-richteten Anschlagfläche, wobei in einer Draufsicht auf die Einsatzaufnahmetasche die axiale Anschlagkante einen äußeren spitzen Klemmwinkel mit der ersten Ebene bildet.

In der EP2979797 A1 ist ein weiterer Einsatz für einen Fräser offenbart, wobei ein Sitz ein Gewindeloch aufweist und der Einsatz ein Schraubenloch aufweist zur Aufnahme einer Schraube aufweist. An einer Bodenfläche des Einsatzes ist ein Vorsprung ausgebildet, dessen Form einer Nut entspricht, welche Nut im Sitz ausgebildet ist und zur Aufnahme des Vorsprungs vorgesehen ist und wobei die Nut und der Vorsprung im eingeschraubten Zustand dicht aneinanderlegen. In einer Weiterbildung ist am Sitz an einer der Bodenfläche gegenüberliegenden oberen Fläche ein weiterer Vorsprung ausgebildet, mittels welchem weiteren Vorsprung der Einsatz gewendet eingesetzt werden kann.

Weiters weisen die aufgezeigten Formen der Schneideinsatze und deren Sitzflächen aus dem Stand der Technik den Nachteil auf, dass es aufgrund der komplexen Geometrien der Anlageflächen bereits bei geringen Toleranzabweichungen zu einem Wackeln oder Vibrieren der Einsätze im Betriebszustand des Werkzeuges führen, was zu einer erheblichen Verminderung deren Schneid- bzw. Spanverhalten und zu früheren Verschleiß führt. Zudem führt das Ausbilden der komplexen Geometrien in dem Sitzflächen zu einem größeren Herstellungsaufwand, was zum einen die Montageverbindung zwischen Einsatz und Sitz wiederum fehleranfälliger gestaltet und weiters einen zusätzlichen wirtschaftlichen Nachteil bildet.

Aufgabe der vorliegenden Erfindung war es, die Nachteile des Standes der Technik zu überwinden und ein Schneidwerkzeug zur Verfügung zu stellen, mittels derer ein Benutzer in der Lage ist, die Schneideinsätze in einfacher Weise fehlerfrei einsetzen zu können, zudem ein Verwackeln oder Verrutschen dieser vor dem Montieren zu verhindern und dennoch komplexe Geometrien der Anlageflächen zwischen den Schneideinsätzen und den Montagesitzen zu vermeiden, sowie einen optimalen Halt und Einsatz im Betrieb zu gewährleisten.

Diese Aufgabe wird durch ein Schneidwerkzeug der eingangs genannten Art dadurch gelöst, dass die erste Ausnehmung einen der vorderen Fläche zugewandten ersten Endanschlag und einen gegenüberliegenden, der hinteren Fläche zugewandten zweiten Endanschlag aufweist; und
dass die Erhebung eine erste Stirnfläche zur Anlage an den ersten Endanschlag und eine gegenüberliegende, zweite Stirnfläche zur Anlage an den zweiten Endanschlag aufweist; und dass eine Länge der ersten Ausnehmung zwischen dem ersten Endanschlag und dem zweiten Endanschlag größer ist als eine Erstreckung der Erhebung zwischen der ersten Stirnfläche und der zweiten Stirnfläche, sodass der Schneideinsatz mittels des ersten und zweiten Endanschlages bezüglich der Erhebung ein mechanisches Spiel aufweist, wobei das mechanische Spiel derart dimensioniert ist, dass die hintere Fläche innerhalb des Spiels an die Anlagefläche anpressbar ist.

Mittels der erfindungsgemäßen Maßnahmen ist zum einen ein einfaches Einsetzen des Schneideinsatzes in den Montagesitz möglich, da mittels der Erhebung und der Ausnehmung eine erste fehlerfreie Positionierung vorgegeben ist, welche gleichzeitig ein Verwackeln oder Gleiten des Schneideinsatzes vor dem Befestigen verhindert.

Bezüglich des vorgesehenen mechanischen Spiels ist eine Verstellung des Schneideinsatzes in Richtung der Anlagefläche des Montagesitzes ermöglicht, wodurch ein Anpressdruck des Einsatzes in Richtung der Anlagefläche einstellbar ist. Weiters sind mittels des mechanischen Spiels Toleranzabweichungen des Schneideinsatzes bezüglich der Ausnehmung und der Erhebung ausgleichbar, wodurch wiederum verbesserte Eigenschaften im Betriebszustand gewährleistet sind

Darüber hinaus erfolgt durch diese Ausgestaltung die Anlage des Schneideinsatzes am Montagesitz lediglich mittels zwei planarer Flächen, nämlich mittels der Montagefläche an der Sitzfläche, sowie der hinteren Fläche an der Anlagefläche, welche bevorzugt im Wesentlichen senkrecht zueinander angeordnet sind (bevorzugt L-förmig), wodurch im Betrieb des Schneidwerkzeuges eine optimierte Krafteinleitung in den Montagesitz, sowie ein idealer Halt ohne Vibrationen gewährleistet ist.

Dadurch ist bei einem Einsetzen des Schneideinsatzes in den Montagesitz, nämlich mittels des Eingriffes der Erhebung in die Ausnehmung eine erste Positionierung des Schneideinsatzes bezüglich der hinteren Fläche zur Anlagefläche, sowie der Montagefläche zur Sitzfläche für die (weitere) Befestigung des Schneideinsatzes bezüglich der jeweiligen Flächen, nämlich der hinteren Fläche zur Anlagefläche, sowie der Montagefläche zur Sitzfläche, vorgegeben.

Mit einem "formschlüssigen Eingriff" der Erhebung in die Ausnehmung ist ein Eingriff zwischen dem Schneideinsatz und dem Montagesitz gemeint, bei dem die Montagefläche und die Sitzfläche im Wesentlichen bezüglich Ihrer Berührungsebene unverschieblich zueinander angeordnet sind, mit Ausnahme des mechanischen Spiels.

Bezüglich des formschlüssigen Eingriffs weisen die Erhebung und die Ausnehmung bevorzugt eine derart (komplementäre) geometrische Form auf, dass eine (erste) Positionierung und Ausrichtung der jeweiligen Flächen (Montagefläche, hintere Fläche) des Schneideinsatzes gegenüber Montagesitz (Anlagefläche, Sitzfläche) erfolgt, wenn der Eingriff der Erhebung in die Ausnehmung erfolgt. Weiters bevorzugt können die geometrische Form der Erhebung und/oder deren Abstand zur Anlagefläche derart gewählt sein, dass eine falsche Positionierung des Schneideinsatzes nicht möglich ist. Bzw. umgekehrt kann ein jeweiliger Abstand der Ausnehmung zur vorderen und hinteren Fläche derart gewählt sein.

So kann mittels einem Aufsetzen des Schneideinsatzes (auf die Erhebung des Montagesitzes mit der Ausnehmung) ein erster Montagezustand hergestellt werden (bzw. die erste Positionierung), bei welchem die zuvor erwähnten Flächen zueinander ausgerichtet sind und mittels der Befestigung des Schneideinsatzes ein zweiter Montagezustand (bzw. ein Befestigungszustand), in welchen die hintere Fläche an die Anlagefläche angepresst ist bzw. der Schneideinsatz in einem betriebsfähigen Zustand montiert ist und gegebenenfalls auch die Montagefläche gegenüber der Sitzfläche angedrückt werden kann.

Dass Anpressen selbst kann beispielsweise mittels bzw. während des Eingreifens/Anbringen des Befestigungsmittels in die Montagebohrung erfolgen. Ferner ist es auch möglich, den Einsatz manuell nach der Positionierung an die Anlagefläche anzupressen (mittels Andrücken gegen die Anlagefläche) und zur Befestigung in diesem Zustand zu fixieren
Weiters sei erwähnt, dass die Erhebung bevorzugt von allen Randbereichen der Sitzfläche beabstandet ist, insbesondere bezüglich der seitlichen Flächen des Schneideinsatzes zwischen der vorderen und hinteren Fläche, bzw. bezüglich der Scheibenflächen des Basiskörpers gleichmäßig beabstandet ist.

In einer vorteilhaften Ausgestaltung kann vorgesehen sein, dass der Schneideinsatz bezüglich der ersten Montagefläche eine gegenüberliegend angeordnete zweite Montagefläche mit einer zweiten Ausnehmung aufweist, wobei die zweite Montagefläche und die zweite Ausnehmung bezüglich des Schneideinsatzes symmetrisch zu der ersten Montagefläche und der ersten Ausnehmung ausgebildet sind. Besonders vorteilhaft ist hierbei, dass der Schneideinsatz als Wendeeinsatz ausgebildet werden kann, sodass dieser nach Verschleiß der ersten Schneidkante gewendet werden kann, wodurch eine zweite Schneidkante zum Einsatz vorgesehen ist oder eine zu der ersten Schneidkante unterschiedliche ausgebildete zweite Schneidkante aufweisen kann.

Vorteilhaft kann sein, wenn die Montagebohrung bezüglich der ersten Montagefläche senkrecht ausgebildet ist und dass im Montagesitz ein Sackloch ausgebildet ist, wobei das Sackloch parallel zur Montagebohrung und senkrecht bezüglich der Sitzfläche angeordnet ist und das Sackloch bezüglich der Montagebohrung einen Achsversatz in Richtung der Anlagefläche aufweist. Mittels dieser Ausgestaltung ist es möglich, aufgrund des Achsversatzes ein Andrücken des Schneideinsatzes mittels des Einsetzen des Befestigungsmittels zu bewirken, z.B. mit dem Einfügen einer Schraube, wodurch das Sackloch bevorzugt ein Gewinde aufweist.

Darüber hinaus kann vorgesehen sein, dass ein Betrag des Achsversatz einer Differenz zwischen der Länge der Ausnehmung und der Erstreckung der Erhebung entspricht.

In einer Ausführung kann vorgesehen sein, dass in der Sitzfläche des Montagesitzes eine Schrägbohrung zur Aufnahme des Befestigungsmittels ausgebildet ist, wobei die Schrägbohrung zur Sitzfläche derart in einem spitzen Winkel angeordnet ist, dass die Schrägbohrung bezüglich ihrer Tiefe ausgehend von der Sitzfläche in Richtung der Anlagefläche geneigt verlaufend ausgebildet ist. Vorteilhaft bei dieser Ausgestaltung ist, dass ein Anpressdruck des Schneideinsatzes innerhalb des Spiels über eine Eindringtiefe des Befestigungsmittels bezüglich der Tiefe der Schrägbohrung einstellbar ist
Darüber hinaus kann vorgesehen sein, dass in der Erhebung zumindest eine Nut ausgebildet ist, wobei sich die Nut zwischen der ersten und zweiten Stirnfläche erstreckt und wobei die Erhebung bevorzugt mittels eines Andrückens des Schneideinsatzes bezüglich der Nut verformbar ist. Besonders vorteilhaft durch diese Maßnahme ist, dass mittels eines Andrückens des Schneideinsatzes die Erhebung bezüglich der Nut elastisch verformbar ist, wodurch ein verbesserter Halt des Schneideinsatzes beim Aufsetzen auf die Erhebung möglich ist, da die Erhebung aufgrund der elastischen Verformung gegen den Schneideinsatz drückt und diesen aufgrund der Flächenpressung festhält. Weiters ist durch ein derartiges Aufstecken aufgrund der Verformung ein kopfüber angeordnetes Montieren des Schneideinsatzes ermöglicht, wodurch z.B. die Schneideinsätze über den gesamten Umfang eines Schneidwerkzeuges bereits ohne Befestigungsmittel aufgesteckt werden können, ohne sich zu lösen, was dem Montagevorgang wesentlich einfacher gestaltet.

In einer weiteren Maßnahme kann vorgesehen sein, dass die Erhebung eine erste Seitenfläche und eine gegenüberliegende zweite Seitenfläche aufweist, wobei sich die erste und zweite Seitenfläche zwischen der ersten und zweiten Stirnfläche erstrecken und dass eine Breite zwischen der ersten und zweiten Seitenfläche derart ausgewählt ist, dass der Schneideinsatz mittels der Ausnehmung auf die Erhebung aufsteckbar ist und in einem nicht betriebenen Zustand des Schneidwerkzeuges ohne dem Befestigungsmittel vor einem Herausfallen gesichert ist. Wie zuvor erwähnt verbessert auch diese Maßnahme das Aufstecken des Schneideinsatzes, wodurch der Montagevorgang in unterschiedlichen Lagen erheblich vereinfacht ist. Zur Vollständigkeit sei erwähnt, dass hierbei eine Art Selbsthemmung des Schneideinsatzes gemeint ist, wobei beim Aufstecken eine Pressung des Einsatzes über die erwähnten Seitenflächen erfolgt. Die Ausnehmung des Einsatzes kann diesbezüglich zu den Seitenflächen komplementäre Formen aufweisen, oder aber auch Unebenheiten in diesen Bereichen, mittels derer die Pressung vornehmbar ist.

Bevorzugt kann vorgesehen sein, dass die Breite zwischen der ersten und zweiten Seitenfläche zumindest in Richtung der Sitzfläche und/oder in Richtung der Anlagefläche ausgebildet ist. Besonders vorteilhaft bei dieser Maßnahme ist, dass bezüglich des Aufsteckens ein größerer Toleranzbereich zwischen der Ausnehmung und der Erhebung zulässig ist. Weiters ist der Halt des Schneideinsatzes nach der Befestigung verbessert.

Zur Vollständigkeit sei bezüglich einem generellen "Aufstecken" erwähnt, dass es sich dabei vorzugsweise um eine Dimensionierung von geringfügig unterschiedlichen Abständen der Bauteile zueinander und/oder einer elastischen Verformung handeln kann, welche derart gewählt ist, dass das Aufstecken mittels einem Einsetzen per Hand bzw. Andrücken per Hand durch einen Bediener möglich ist.

Darüber hinaus kann vorgesehen sein, dass der Schneideinsatz mittels des Befestigungsmittels zwischen einer ersten Stellung und einer zweiten Stellung verstellbar ist, wobei der Schneideinsatz bezüglich des Spiels in der ersten Stellung beweglich ist und in der zweiten Stellung fixierbar ist. Beispielsweise kann der Schneideinsatz und/oder das Befestigungsmittel eine Abschrägung aufweisen, welche beim Einsetzen des Befestigungsmittels die Verstellung veranlasst.

Bevorzugt kann zu der zuvor beschriebenen Maßnahme vorgesehen sein, dass der Schneideinsatz mittels des Befestigungsmittels bei der Verstellung in die zweite Stellung in Richtung der Anlagefläche anpressbar ist.

Dabei kann in einer möglichen Weiterbildung vorgesehen sein, das Befestigungsmittel eine Kulisse aufweist, wobei der Schneideinsatz in der ersten Stellung bezüglich der Montagebohrung relativ zu dem Befestigungsmittel frei verschiebbar ist und der Schneideinsatz in der zweiten Stellung mittels der Kulisse in Richtung der Anlagefläche anpressbar ist. Diese Ausgestaltung bringt den Vorteil mit sich, dass das Befestigungsmittel vor dem Schneideinsatz in die Sitzfläche eingesetzt werden kann und der Schneideinsatz beim Einsetzen zusätzlich vom Befestigungsmittel führbar ist.

In einer Ausführungsform kann vorgesehen sein, dass ein erster Abstand zwischen dem zweiten Endanschlag und der hinteren Fläche einem zweiten Abstand zwischen der zweiten Stirnfläche und der Anlagefläche entspricht. Mit dieser Ausgestaltung kann ist eine geringe Selbsthemmung des Schneideinsatzes zwischen dem Endanschlag und der hinteren Fläche möglich, wodurch wiederum ein Aufstecken des Schneideinsatzes realisiert werden kann. Zur Vollständigkeit sei erwähnt, dass es sich bei dem ersten und zweiten Abstand um Abstände handelt, welche in einer Ebene angeordnet sind.

Weiters von Vorteil kann sein, wenn die Anlagefläche und die Sitzfläche in einem spitzen Winkel zueinander angeordnet sind, insbesondere in einem Winkel von 89° bis 89,9°. Durch eine geringe Neigung der Anlagefläche zur Sitzfläche kann wieder eine Selbsthemmung bezüglich einem Aufstecken vorgesehen werden, sowie ein verbesserter Halt im Betrieb, da der Schneideinsatz aufgrund der Neigung bei Krafteinwirkung in Richtung der Sitzfläche gedrängt wird.

Zum besseren Verständnis der Erfindung wird diese anhand der nachfolgenden Figuren näher erläutert.

Es zeigen jeweils in stark vereinfachter, schematischer Darstellung:
- Fig. 1: Einen Ausschnitt aus einem Schneidwerkzeug in Schrägansicht;
- Fig. 2: eine schaubildliche Darstellung eines Montagesitzes eines erfindungsgemäßen Schneidwerkzeuges mit einem Schneideinsatz;
- Fig. 3: a und b; eine Ausführungsform eines Schneidwerkzeuges in Schnittansicht;
- Fig. 4: eine mögliche Ausgestaltung eines Montagesitzes in Draufsicht sowie eines Schneideinsatzes in Ansicht von unten;
- Fig. 5: a und b; eine mögliche Ausführungsform des Schneidwerkzeuges in Schnittansicht;
- Fig. 6: eine weitere Ausführungsform des Schneideinsatzes in Schnittansicht;
- Fig. 7: eine mögliche Weiterbildung des Montagesitzes in Schrägansicht;
- Fig. 8: eine weitere Ausführungsform des Schneidwerkzeuges in Schnittansicht;
- Fig. 9: eine weitere Ausführungsform des Schneidwerkzeuges, teilweise geschnitten;
- Fig. 10: a und b; eine Ausführungsform eines Befestigungsmittels in Schrägansicht und Draufsicht;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

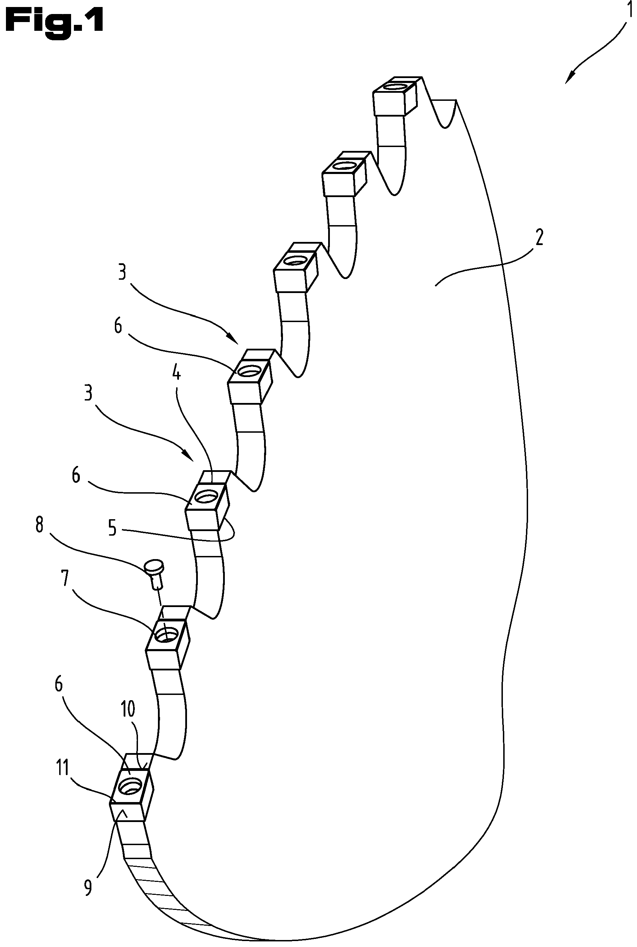

In Fig. 1 ist ein Ausschnitt aus einem Schneidwerkzeug 1, insbesondere einem Scheibenfräser, in Schrägansicht dargestellt.

Das Schneidwerkzeug 1 weist einen scheibenförmigen Basiskörper 2 auf und zumindest einen über einen Umfang des Basiskörpers 2 angeordneten Montagesitz 3, wobei der Montagesitz 3 bevorzugt L-förmig ausgebildet sein kann, sowie eine Anlagefläche 4 und eine Sitzfläche 5 zur Aufnahme eines Schneideinsatzes 6 aufweist.

Der Schneideinsatz 6 umfasst eine Montagebohrung 7 zur Aufnahme eines Befestigungsmittels 8 und weiters eine vordere Fläche 9 sowie eine genüberliegende hintere Fläche 10, wobei die vordere Fläche 9 zumindest eine Schneidkante 11 aufweist und die hintere Fläche 10 zur Anlage an der Anlagefläche 4 und zur Übertragung von Schneidkräften in den Montagesitz 3 ausgebildet ist.

Das dargestellte Schneidwerkzeug 1 weist die Montagesitze 3 an einem äußeren Umfang auf, es kann sich aber auch um ein Schneidwerkzeug mit innenliegenden Schneidformen handeln, z.B. Montagesitze an einem inneren Umfang.

Die Montagesitze können dabei ebenfalls Bohrungen zur Aufnahme des Befestigungsmittels, wie aus dem Stand der Technik bekannt, aufweisen.

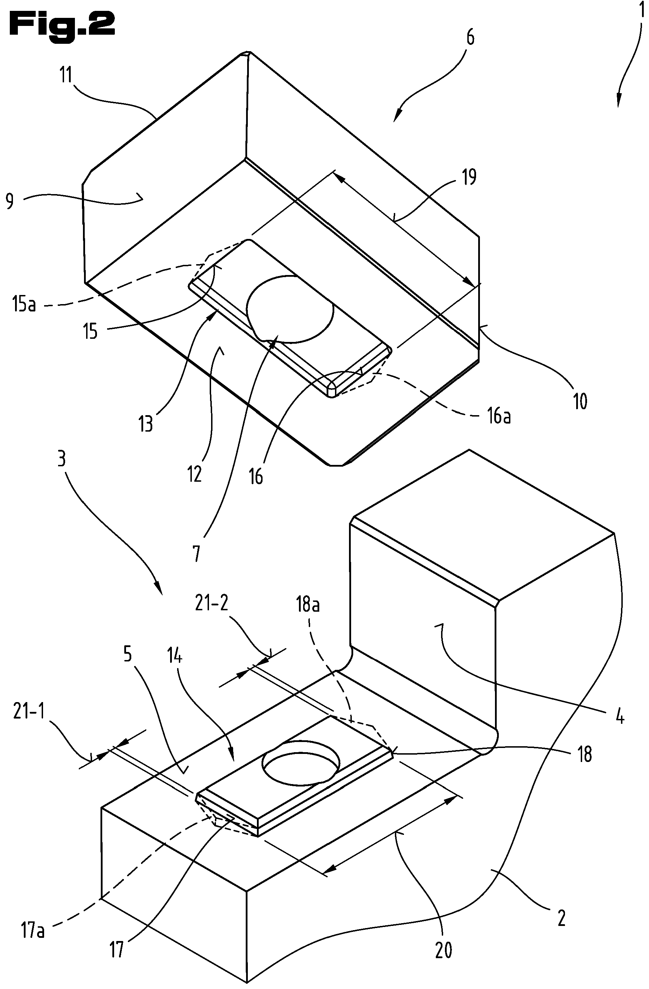

In Fig. 2 ist ein Montagesitz 3 und ein Schneideinsatz 6 eines erfindungsgemäßen Schneidwerkzeuges 1 in schaubildlicher Darstellung gezeigt, wobei der Schneideinsatz 6 von unten zu sehen ist und somit die Verbindungsbereiche der beiden Bauteile gezeigt sind.

Der Schneideinsatz 6 umfasst eine erste Montagefläche 12, wobei sich die erste Montagefläche 12 zwischen der vorderen Fläche 9 und der hinteren Fläche 10 erstreckt und zur Anlage an der Sitzfläche 5 des Montagesitzes 3 ausgebildet ist und wobei eine erste Ausnehmung 13 in der ersten Montagefläche 12 ausgebildet ist. An dem Montagesitz 3 ist eine Erhebung 14 an der Sitzfläche 5 ausgebildet, wobei die Erhebung 14 zum formschlüssigen Eingriff in die Ausnehmung 13 ausgebildet bzw. vorgesehen ist.

Weiters weist die erste Ausnehmung 13 des Schneideinsatzes 6 einen der vorderen Fläche 9 zugewandten ersten Endanschlag 15 und einen gegenüberliegenden, der hinteren Fläche 10 zugewandten zweiten Endanschlag 16 auf.

Die Erhebung 14 des Montagesitzes 3 weist eine erste Stirnfläche 17 zur Anlage an den ersten Endanschlag 15 und eine gegenüberliegende, zweite Stirnfläche 18 zur Anlage an den zweiten Endanschlag 16 aufweist, wobei eine Länge 19 der ersten Ausnehmung 13 zwischen dem ersten Endanschlag 15 und dem zweiten Endanschlag 16 größer ist als eine Erstreckung 20 der Erhebung 14 zwischen der ersten Stirnfläche 17 und der zweiten Stirnfläche 18, sodass der Schneideinsatz 6 mittels des ersten und zweiten Endanschlages 15,16 bezüglich der Erhebung 14 ein mechanisches Spiel 21 aufweist, wobei das mechanische Spiel 21 derart dimensioniert ist, dass die hintere Fläche 10 innerhalb des Spiels 21 an die Anlagefläche 4 anpressbar ist.

Bezüglich des mechanischen Spiels 21 weist der Schneideinsatz 6, abhängig von seiner aktuellen Lage zu der Anlagefläche 4 eine Distanz zu dem ersten Endanschlag 15 und/oder dem zweiten Endanschlag 16 auf, wie mit dem mechanischen Spiel 21-1 und 21-2 angedeutet ist.

Wie dargestellt, können die Ausnehmung 13 und die Erhebung 14 bevorzugt rechteckig, bzw. quaderförmig ausgebildet sein.

Die Endanschläge 15,16 sowie die Stirnflächen 17, 18 können aber auch unterschiedliche geometrische Formen aufweisen, bevorzugt zueinander komplementäre. Diesbezüglich ist eine weitere mögliche Form der Endanschläge 15a,16a, sowie der Stirnflächen 17a, 18a strichliert angedeutet, welche beispielsweise dreieckförmig sein können. Es wären aber auch andere Formen denkbar, z.B. bogenförmig, schräg verlaufend etc.

Wie dargestellt, handelt es sich bei der Anlagefläche 4 und der Sitzfläche 5 bevorzugt um planare Flächen, wodurch ein maximaler Halt und eine optimale Einpassung des Schneideinsatzes 6 in den Montagesitz 3 ermöglicht ist, wodurch ein äußerst harmonischer Betrieb des Schneidwerkzeuges 1 realisiert ist.

Wie aus Fig. 2 ersichtlich, ist die Erhebung 14 bevorzugt von allen Randbereichen der Sitzfläche 5 beabstandet, insbesondere gleichmäßig bezüglich der seitlichen Flächen bzw. der Scheibenflächen des Basiskörpers 2 beabstandet. Weiters kann die Erhebung 14 bezüglich der Randbereiche der Sitzfläche 5 zentriert angeordnet sein

Weiters ist die Montagebohrung 7 zur Aufnahme eines Befestigungsmittels dargestellt, wobei im Montagesitz 3 bevorzugt in der Sitzfläche 5 auch eine Bohrung zur Befestigung vorgesehen sein kann, welche wie dargestellt in der Erhebung 14 ausgebildet ist, aber auch außerhalb dieser angeordnet sein kann.

In einer möglichen Ausgestaltung kann vorgesehen sein, dass der Schneideinsatz 6 mittels des Befestigungsmittels bezüglich des Spiels fixierbar ist, aber manuell oder mittels eines zusätzlichen Befestigungsmittels gegen die Anlagefläche anpressbar ist

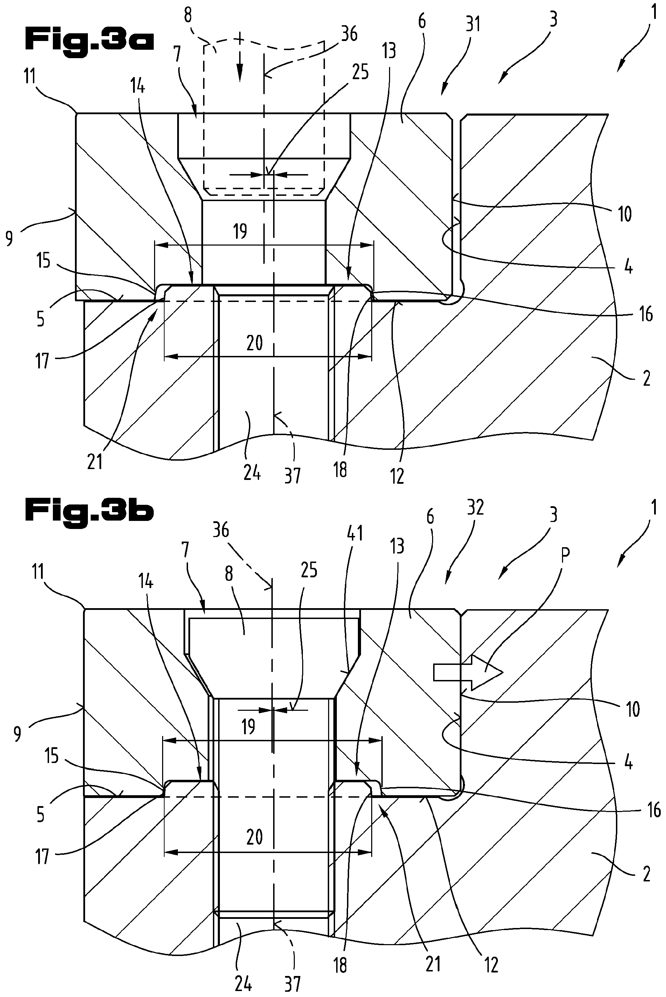

In den Figuren 3 bis 10 sind weitere und gegebenenfalls für sich eigenständige Ausführungsformen des Schneideinsatzes und des Montagesitzes dargestellt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Fig. 1 und 2 hingewiesen bzw. Bezug genommen.

In Fig. 3a und 3b ist eine mögliche Ausführungsform eines Schneidwerkzeuges 1 in Schnittansicht dargestellt.

Wie zuvor beschrieben ist die Länge 19 der ersten Ausnehmung 13 zwischen dem ersten Endanschlag 15 und dem zweiten Endanschlag 16 dargestellt, welche größer ist als die Erstreckung 20 der Erhebung 14 zwischen der ersten Stirnfläche 17 und der zweiten Stirnfläche 18, sodass der Schneideinsatz 6 mittels des ersten und zweiten Endanschlages 15,16 bezüglich der Erhebung 14 ein mechanisches Spiel 21 aufweist, wobei das mechanische Spiel 21 derart dimensioniert ist, dass die hintere Fläche 10 innerhalb des Spiels 21 an die Anlagefläche 4 anpressbar ist.

Die Montagebohrung 7 ist bezüglich der ersten Montagefläche 12 senkrecht ausgebildet und weiters ist im Montagesitz 3 ein Sackloch 24 mit einer Mittelachse 37 ausgebildet, wobei das Sackloch 24 parallel zur Achse 36 der Montagebohrung 7 und senkrecht bezüglich der Sitzfläche 5 angeordnet ist und das Sackloch 24 bezüglich der Montagebohrung 7 einen Achsversatz 25 in Richtung der Anlagefläche 4 aufweist.

In Fig. 3a ist das Befestigungsmittel 8 strichliert angedeutet und kann beispielsweise als eine Schraube ausgebildet sein. Mittels des Achsversatzes 25 kann vorgesehen sein, dass ein Anpressdruck P gegen die Anlagefläche 4 mittels des Schneideinsatzes 6 und dem Befestigungsmittel 8 aufgebaut werden kann.

Darüber hinaus kann vorgesehen sein, dass ein Betrag des Achsversatz 25 einer Differenz zwischen der Länge 19 der Ausnehmung 13 und der Erstreckung 20 der Erhebung 14 entspricht.

Der Schneideinsatz 6 befindet sich in Fig. 3a in einer ersten Stellung 31 und in Fig 3b einer zweiten Stellung 32, wobei der Schneideinsatz 6 mittels des Befestigungsmittels 8 zwischen der ersten Stellung 31 und der zweiten Stellung 32 verstellbar ist und der Schneideinsatz 6 bezüglich des Spiels 21 in der ersten Stellung 31 beweglich ist und in der zweiten Stellung 32 fixierbar ist.

Weiters kann, wie dargestellt, vorgesehen sein, dass der Schneideinsatz 6 mittels des Befestigungsmittels 8 bei der Verstellung in die zweite Stellung 32 in Richtung der Anlagefläche 4 anpressbar ist. Zudem kann vorgesehen sein, dass der Anpressdruck P über eine Einschraubtiefe des Befestigungsmittels 8 mittels einer schrägen Fläche variierbar ist, beispielsweise über eine Innenfläche 41 der Montagebohrung 7.

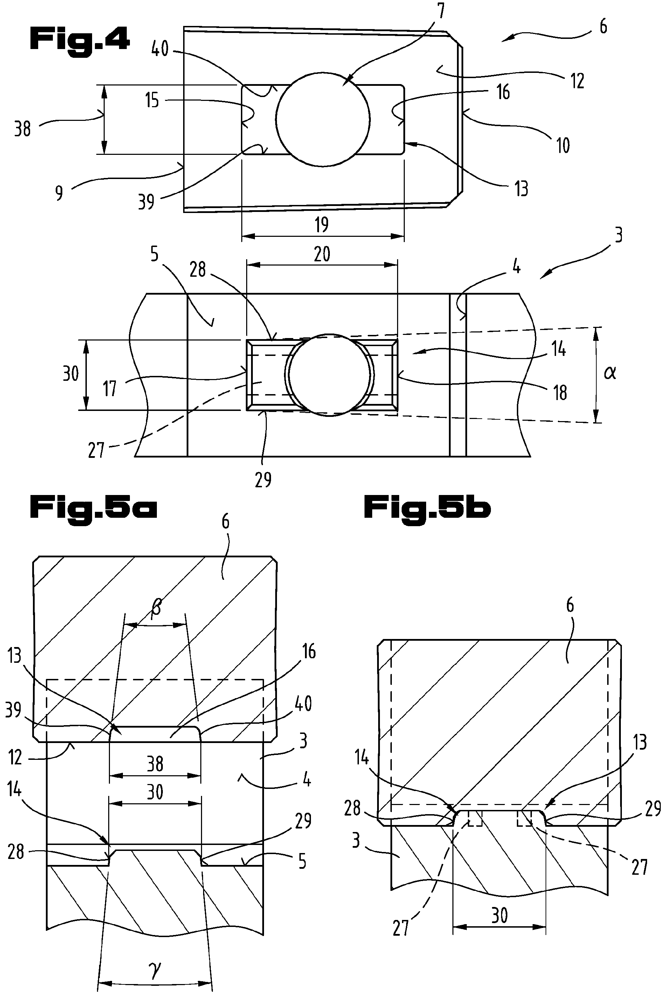

In Fig. 4 eine mögliche Ausgestaltung eines Montagesitzes in Draufsicht dargestellt sowie eines Schneideinsatzes in Ansicht von unten.

Die Erhebung 14 weist eine erste Seitenfläche 28 und eine gegenüberliegende zweite Seitenfläche 29 auf, welche sich zwischen der ersten und zweiten Stirnfläche 17, 18 erstrecken.

Analog dazu kann die Ausnehmung 13 bevorzugt eine erste Begrenzungsfläche 39 und eine gegenüberliegende zweite Begrenzungsfläche 40 aufweisen, welche sich zwischen dem ersten und zweiten Endanschlag 15,16 erstrecken und bezüglich einer Weite 38 zueinander beabstandet sind. Die Weite 38 ist bevorzugt senkrecht zur Länge 19 angeordnet.

Bevorzugt kann eine Breite 30 der Erhebung 14 zwischen der ersten und zweiten Seitenfläche 28,29 derart ausgewählt sein, dass der Schneideinsatz 6 mittels der Ausnehmung 13 auf die Erhebung 14 aufsteckbar ist und in einem nicht betriebenen Zustand des Schneidwerkzeuges 1 ohne dem Befestigungsmittel 8 vor einem Herausfallen gesichert ist.

In einer möglichen Weiterbildung kann die Breite 30 zwischen der ersten und zweiten Seitenfläche 28,29 in Richtung der Anlagefläche 4 zunehmend ausgebildet sein, wodurch die Seitenflächen 28,29 in einem Winkel α zueinander angeordnet sind, wie strichliert angedeutet ist.

Wie strichliert angedeutet, kann in der Erhebung 14 zumindest eine Nut 27 ausgebildet sein, wobei sich die Nut 27 zwischen der ersten und zweiten Stirnfläche 17, 18 erstreckt und die Erhebung 14 mittels eines Andrückens des Schneideinsatzes 6 bezüglich der Nut 27 verformbar ist.

Die Bohrung im Montagesitz 3 kann beispielsweise auch derart dimensioniert sein, dass die Seitenflächen 28,29 unterbrochen sind. Weiters kann eine derartige Unterbrechung auch unabhängig von einer Bohrung vorgesehen sein, z.B. mit einer Nur quer zur Erstreckung 20.

In Fig. 5a und b ist eine mögliche Ausführungsform des Schneidwerkzeuges in Schnittansicht dargestellt, wobei Ansicht in Richtung der Anlagefläche ausgerichtet ist.

Der Schneideinsatz 6 in Fig. 5a befindet sich dabei in einem noch nicht eingesetzten Zustand.

Wie zuvor beschrieben ist die Breite 30 der Erhebung 14 zwischen der ersten und zweiten Seitenfläche 28,29 wiederum derart ausgewählt, dass der Schneideinsatz 6 mittels der Ausnehmung 13 auf die Erhebung 14 aufsteckbar ist und in einem nicht betriebenen Zustand des Schneidwerkzeuges 1 ohne dem Befestigungsmittel 8 vor einem Herausfallen gesichert ist.

In einer Ausführung kann die Breite 30 zwischen der ersten und zweiten Seitenfläche 28,29 in Richtung der Sitzfläche 5 zunehmend ausgebildet sein, wodurch die Seitenflächen 28,29 in einem Winkel γ zueinander angeordnet sind, wie dargestellt.

Alternativ ist es auch möglich, die ersten und zweiten Begrenzungsflächen 39, 40 der Ausnehmung 13 in einem Winkel β zueinander geneigt anzuordnen, sodass die Weite 38 in Richtung der Montagefläche 12 zunehmend ausgebildet.

Weiters kann eine Kombination der beiden beschriebenen Varianten vorgesehen sein, wobei bevorzugt der Winkel γ größer ist als der Winkel β.

Es kann auch vorgesehen sein, dass die Breite 30 in Richtung der Sitzfläche 5 abnehmend ausgebildet ist, sodass ein geringfügiges "selbständiges Ziehen" des Schneideinsatzes in Richtung der Sitzfläche 5 erfolgt.

Die Begrenzungsflächen können wie eingangs erwähnt zudem Unebenheiten, bzw. Erhöhungen und Vertiefungen in ihren Oberflächen aufweisen, mittels denen der Schneideinsatz aufsteckbar ist. Beispielsweise können die Begrenzungsflächen rillenförmig ausgebildet sein, wobei die Weite bezüglich dieser Unebenheiten in den Minima geringer als die Breite der Erhebung ist, sodass der Schneideinsatz gegen ein Herausfallen gehemmt ist.

In Fig. 5b ist der Schneideinsatz 6 in einem aufgesteckten Zustand dargestellt, wobei die Seitenflächen 28,29 und die Begrenzungsflächen 39, 40 aneinander gepresst sind, sodass der Einsatz aufgrund der Flächenpressung zwischen dieser gegen ein Herausfallen gesichert ist.

Wie strichliert angedeutet, kann die Erhebung 14 zumindest eine oder mehrere Nuten 27 aufweisen, wobei sich die Nut 27 zwischen der ersten und zweiten Stirnfläche 17, 18 erstreckt, wobei die Erhebung 14 mittels eines Andrückens des Schneideinsatzes 6 bezüglich der Nut 27 geringfügig verformbar ist, sodass ein erleichtertes Aufstecken möglich ist.

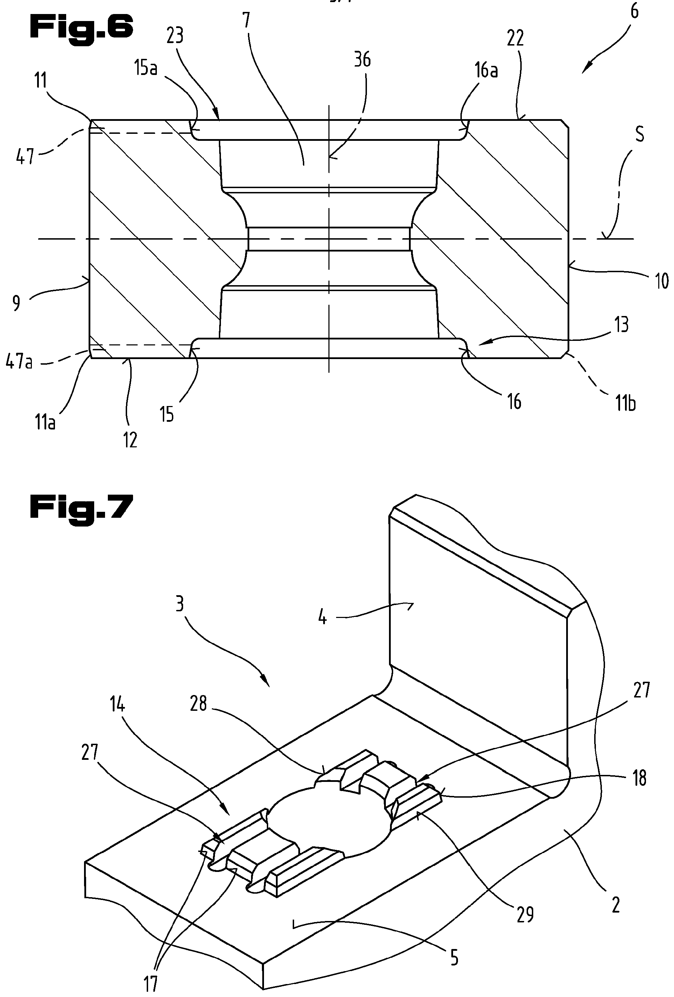

In Fig. 6 ist eine weitere Ausführungsform des Schneideinsatzes in Schnittansicht dargestellt. Die Schnittführung verlauft dabei in einer Längsmitte des Schneideinsatzes, entlang der Länge der Ausnehmung 13.

Der Schneideinsatz 6 weist bezüglich der ersten Montagefläche 12 eine gegenüberliegend angeordnete zweite Montagefläche 22 mit einer zweiten Ausnehmung 23 auf, wobei die zweite Montagefläche 22 und die zweite Ausnehmung 23 bezüglich des Schneideinsatzes 6 symmetrisch zu der ersten Montagefläche 12 und der ersten Ausnehmung 13 ausgebildet sind. Die symmetrische Anordnung ist bezüglich einer Ebene S ausgebildet, welche Ebene S in der Mitte des Schneideinsatzes, bevorzugt parallel zur Montagefläche 12 angeordnet ist.

Somit weist die zweite Ausnehmung 23 ebenfalls einen bezüglich der Ebene S gespiegelten ersten Endanschlag 15a und zweiten Endanschlag 16a auf, welche symmetrisch zum ersten Endanschlag 15 und zweiten Endanschlag 16 der ersten Ausnehmung 13 ausgebildet sind.

Weiters ist eine Schneidkante 11 angedeutet, wobei bezüglich der symmetrischen Ausbildung der Schneideinsatz 6 eine zweite Schneidkante 11a aufweist, welche beim Wenden des Schneideinsatzes 6 zur Anwendung vorgesehen ist, wenn die zweite Montagefläche 22 an der Sitzfläche des Montagesitzes anliegt.

Die Achse 36 der Montagebohrung 7 ist bevorzugt zentriert in dem Schneideinsatz 6 angeordnet, sie kann aber auch beispielsweise in Richtung der vorderen oder der Hinteren Fläche 9, 10 versetzt angeordnet sein, insbesondere wenn die beiden Schneidkanten 11, 11a an der vorderen Fläche 9 ausgebildet sind.

Darüber hinaus ist ein Kanal 47 angedeutet, welcher von der Schneidkante 11 in Richtung der hinteren Fläche 10 verlaufend ausgebildet ist und zur Teilung der Schneidkante sowie zum Bruch des abgetragenen Spans vorgesehen ist. Analog dazu kann in der ersten Montagefläche 12 ein Zweiter Kanal 47a bezüglich der zweiten Schneidkante 11a vorgesehen sein.

Alternativ wäre es aber auch denkbar, den Schneideinsatz 6 derart auszubilden, dass beim Wenden des Schneideinsatzes 6 die vordere Fläche 9 zur Anlage an der Anlagefläche vorgesehen ist, wodurch die zweite Schneidkante 11b derart gegenüberliegend zur Ebene S und zur Achse 36 angeordnet ist, dass diese an der hinteren Fläche 10 ausgebildet ist, wie angedeutet. Bei einer derartigen Anordnung wäre die zweite Ausnehmung 23 zusätzlich gespiegelt bezüglich einer zu der Ebene S senkrecht angeordneten Ebene ausgebildet, wobei die Achse 36 in der senkrecht angeordnete Ebene liegt. Bezüglich der gespiegelten Anordnung wären somit die gezeigten Endanschläge der zweiten Ausnehmung 23 vertauscht.

In Fig. 7 ist eine mögliche Weiterbildung des Montagesitzes in Schrägansicht dargestellt.

Die Erhebung 14 des Montagesitzes 3 kann wie zuvor beschrieben z.B. zwei Nuten 27 aufweisen. wobei sich die jeweiligen Nuten 27 zwischen der ersten und zweiten Stirnfläche 17, 18 erstrecken.

Wie bereits erwähnt, kann die Erhebung 14 mittels eines Andrückens des Schneideinsatzes bezüglich der Nuten 27 verformbar ausgebildet sein. Weiters können die Erhebung 14 und die Nuten 27 unterbrochen sein.

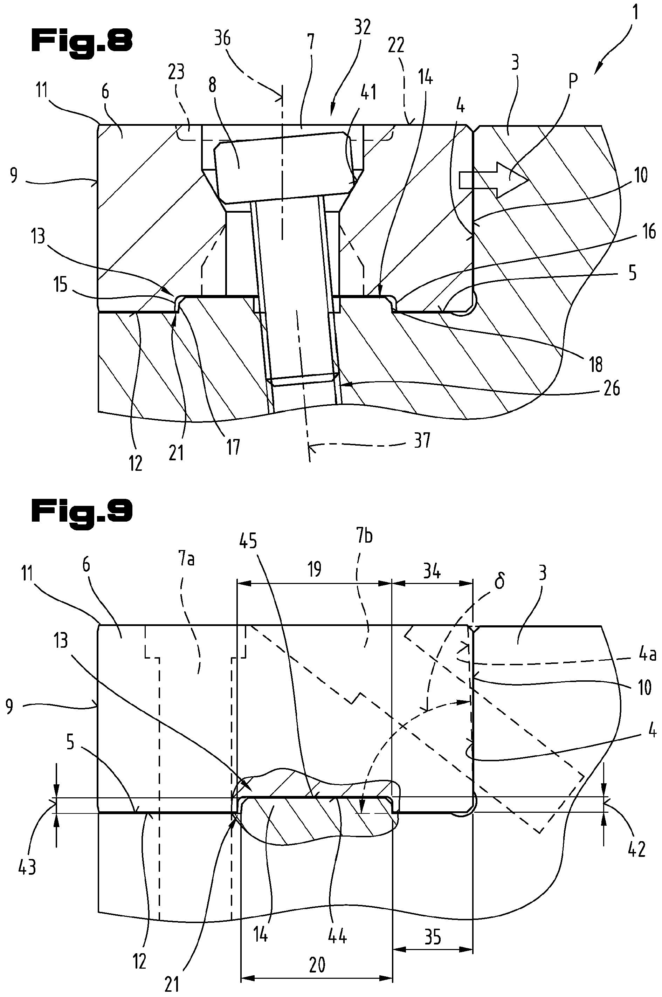

In Fig. 8 ist eine weitere Ausführungsform des Schneidwerkzeuges in Schnittansicht dargestellt.

Die Bohrung zur Aufnahme des Befestigungsmittels 8 in der Sitzfläche 5 des Montagesitzes 3 ist als eine Schrägbohrung 26 ausgebildet ist, wobei die Schrägbohrung 26 zur Sitzfläche 5 derart in einem spitzen Winkel angeordnet ist, dass die Schrägbohrung 26 bezüglich ihrer Tiefe ausgehend von der Sitzfläche 5 in Richtung der Anlagefläche 4 geneigt verlaufend ausgebildet ist. Mit anderen Worten ist die Schrägbohrung 26 in Draufsicht auf die Sitzfläche 5 in Richtung der Anlagefläche 4 verlaufend ausgebildet.

Die Achse 36 der Montagebohrung 7 kann wie dargestellt senkrecht zur Montagefläche 12 ausgebildet sein und somit eine andere Orientierung als die Schrägbohrung 26 aufweisen, aber auch parallel zur Schrägbohrung 26 bzw. deren Mittelachse 37 angeordnet sein.

Der in Fig. 8 dargestellte Schneideinsatz 6 befindet sich in der Verstellung in die zweite Stellung 32, wobei der Schneideinsatz 6 bezüglich des Spiels 21 der zweiten Stellung 32 fixierbar ist. Wie dargestellt ist der Schneideinsatz 6 mittels des Befestigungsmittels 8 bei der Verstellung in die zweite Stellung 32 in Richtung der Anlagefläche 4 bezüglich einem Anpressdruck P anpressbar. Diesbezüglich kann das Befestigungsmittel 8 wie dargestellt über eine Art Kulisse an einer konischen bzw. geneigten Innenfläche 41 der Montagebohrung 7 geführt sein, wodurch die Verstellung des Schneideinsatzes 6 bewerkstelligt wird.

Wie strichliert angedeutet, kann der Schneideinsatz 6 wieder eine zuvor erwähnte bezüglich der ersten Montagefläche 12 gegenüberliegend angeordnete zweite Montagefläche 22 mit einer zweiten Ausnehmung 23 aufweisen, wobei die zweite Montagefläche 22 und die zweite Ausnehmung 23 bezüglich des Schneideinsatzes 6 symmetrisch zu der ersten Montagefläche 12 und der ersten Ausnehmung 13 ausgebildet sind.

Fig. 9 zeigt eine weitere Ausführungsform des Schneidwerkzeuges, teilweise geschnitten.

Wie dargestellt, kann vorgesehen sein, dass ein erster Abstand 34 zwischen dem zweiten Endanschlag 16 und der hinteren Fläche 10 einem zweiten Abstand 35 zwischen der zweiten Stirnfläche 17 und der Anlagefläche 4 entspricht. Mittels dieser Ausgestaltung ist ein passgenaues Einsetzen des Schneideinsatzes 6 realisierbar, wobei eine Verstellung und ein Anpressen bezüglich des Spiels 21 dennoch ermöglicht ist.

Unabhängig von der gezeigten Ausführung des Schneideinsatzes 6 und des Montagesitzes 3 ist eine Tiefe 42 zwischen der Montagefläche 12 und einer oberen Fläche 44 der Ausnehmung 13, sowie eine Höhe 43 zwischen der Sitzfläche 5 und einer Deckfläche 45 der Erhebung 14 dargestellt.

Die Höhe 43 der Erhebung 14 ist bevorzugt geringfügig kleiner als die Tiefe 42 der Ausnehmung 13, wodurch eine Anlage der Montagefläche 12 an der Sitzfläche 5 vor einer Anlage der Ausnehmung 13 mittels der oberen Fläche 44 and der Deckfläche 45 der Erhebung 14 erfolgt, wodurch wiederum ein verbesserter Halt des Schneideinsatzes 6 gewährleistet ist.

Die Höhe 43 sowie die Tiefe 42 können auch andere Dimensionen als in den Figuren dargestellt aufweisen, sodass diese z.B. weiter in den Schneideinsatz 6 eindringen.

Ebenso kann die Länge 19 der Ausnehmung 13 sowie die Erstreckung 20 der Erhebung 14 kürzer, wie dargestellt, oder auch länger dimensioniert sein.

Weiters können unabhängig von der gezeigten Ausführung die Anlagefläche 4 und die Sitzfläche 5 in einem spitzen Winkel zueinander angeordnet sein, sodass ein zusätzliches Andrücken des Schneideinsatzes 6 in Richtung der Sitzfläche 5 erfolgt. Besonders bevorzugt können die Anlagefläche 4 und die Sitzfläche 5 einen spitzen Winkel δ einschließen, wobei der Winkel δ 87° bis 89,95°, insbesondere 89° bis 89,9° beträgt.

Darüber hinaus kann eine Kombination des spitzen Winkels δ mit der zuvor beschriebenen ersten und zweiten Abstände 34,35 vorgesehen sein, wodurch ein selbstständiges Halten des Schneideinsatzes 6 zudem optimierbar ist.

Weiters sind in Fig. 9 für unterschiedliche Ausführungsformen des Schneideinsatzes 6 weitere mögliche Anordnungen und Ausbildungen der Montagebohrung 7 strichliert angedeutet.

So kann beispielsweise eine Montagebohrung 7a vorgesehen sein, welche in einem vorderen Bereich des Schneideinsatzes 6, in Richtung der vorderen Fläche 9 angeordnet ist. Wie dargestellt kann diese auch zwischen der Ausnehmung 13 und der vorderen Fläche 9 angeordnet sein. Zudem kann diesbezüglich der Schneideinsatz 6 auch wendbar ausgebildet sein, mit einer zweiten Montagefläche und einer zweiten Ausnehmung, wie zuvor beschrieben.

Wie angedeutet kann die Montagebohrung 7b auch schräg verlaufend bezüglich der Montagefläche 12 bzw. der hinteren Fläche 10 ausgebildet sein. Wie in den vorangegangenen Figuren erwähnt, kann die Montagebohrung parallel bezüglich der Schrägbohrung ausgebildet sein. Weiters kann die Montagebohrung 7b wie dargestellt eine Austrittsöffnung in der hinteren Fläche 10 aufweisen, wodurch eine Schrägbohrung in der Anlagefläche 4 vorgesehen sein kann.

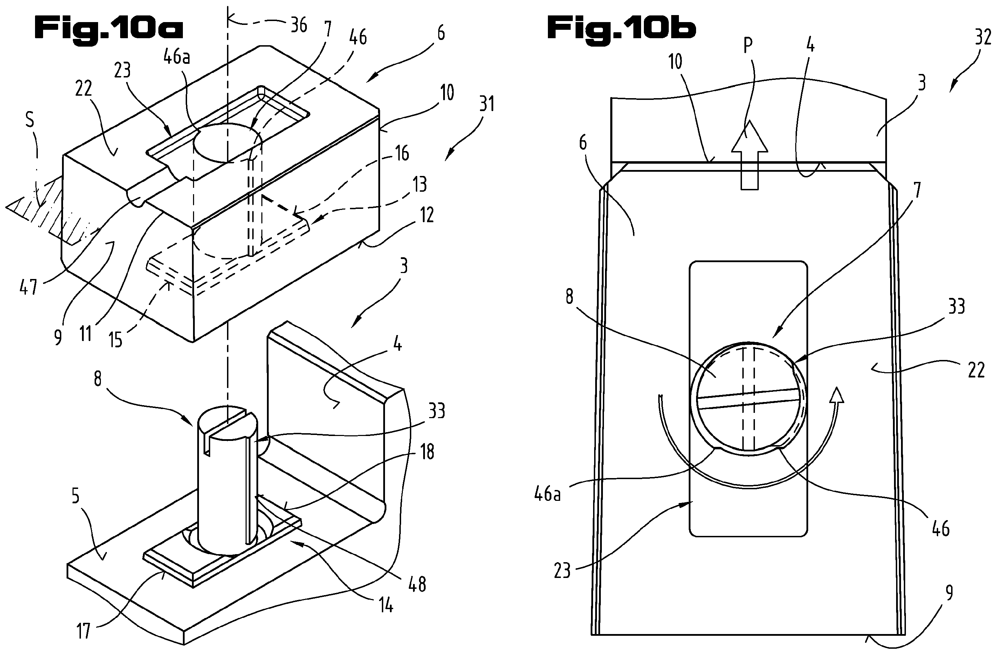

In Fig. 10a und 10b ist eine Ausführungsform eines Befestigungsmittels in Schrägansicht und Draufsicht dargestellt.

Das Befestigungsmittel 8 weist eine Kulisse 33 auf, wobei der Schneideinsatz 6 in der ersten Stellung 31 bezüglich der Montagebohrung 7 relativ zu dem Befestigungsmittel 8 frei verschiebbar ist und der Schneideinsatz 6 in der zweiten Stellung 32 mittels der Kulisse 33 in Richtung der Anlagefläche 4 anpressbar ist.

Wie in Fig. 10a dargestellt, kann das Befestigungsmittel 8 in dem Montagesitz 3 eingeschraubt oder drehbar gelagert sein. Im dargestellten Zustand bzw. der ersten Stellung 31 kann der Schneideinsatz 6 bezüglich der Montagebohrung 7 entlang dem Befestigungsmittel 8 bewegt werden. Ebenso ist der Schneideinsatz 6 bezüglich des Spiels 21 in der ersten Stellung 31 beweglich.

Bei Verstellung in die zweite Stellung 32, erfolgt ein Anpressen des Schneideinsatzes 6 in Richtung der Anlagefläche 4 mittels der Kulisse 33 durch ein Drehen des Befestigungsmittels 8 gemäß Fig 10b.

Zudem kann eine Mantelfläche 48 des Befestigungsmittels 8 bezüglich der Kulisse 33 in Richtung der Sitzfläche 5 verjüngend ausgebildet sein, bzw. die Montagebohrung 7 eine derart komplementäre Form aufweisen, wodurch bei der Verstellung der Schneideinsatz 6 zusätzlich in Richtung der Sitzfläche 5 gedrückt wird.

Der Schneideinsatz 6 kann weiters eine Rückstellfläche 46 bezüglich der Kulisse 33 aufweisen, mittels welcher Freigabefläche 46 der Schneideinsatz bei Zurückdrehen des Befestigungsmittels 8 von der Anlagefläche 4 distanziert wird.

Weiters kann der Schneideinsatz 6 wiederum als Wendeform ausgebildet sein und eine zweite Montagefläche 22 sowie eine zweite Ausnehmung 23 symmetrisch zu der ersten Montagefläche 12 und der ersten Ausnehmung 13 bezüglich der Ebene S aufweisen. Analog dazu ist in der Montagebohrung 7 eine komplementäre Ausnehmung bezüglich der Kulisse 33 ausgebildet mit einer zweiten Rückstellfläche 46a.

Darüber hinaus kann vorgesehen sein, dass ein Anpressdruck P mittels der Verstellung des Befestigungsmittels einstellbar ist.

Unabhängig von der gezeigten Ausführungsform ist weiters zuvor beschriebener Kanal 47 dargestellt.

Wie generell aus den gesamten Figuren 2 bis 10 hervorgeht, ist mittels einem Aufsetzen der Schneideinsätze 6 anhand der Ausnehmung 13 auf die Erhebung 14 und den dadurch erfolgenden Eingriff der Erhebung in die Ausnehmung bereits eine erste Positionierung bzw. ein erster Montagezustand des Schneideinsatzes 6 gegenüber dem Montagesitz 3 erfolgt, sodass der Schneideinsatz 6 bezüglich der hinteren Fläche 10 zur Anlagefläche 4, bzw. der Montagefläche 12 zur Sitzfläche 5 ausgerichtet ist. So kann bezüglich der weiteren Montage bzw. Befestigung des Schneideinsatzes dieser einem vorbestimmten Bewegungspfad folgen bzw. entlang diesem gedrückt werden, nämlich entsprechend einer Richtung des mechanischen Spiels, bzw. dem Anpressen in Richtung der Anlagefläche.

Wie weiters aus den Figuren ersichtlich, können die Erhebung und die Ausnehmung bezüglich des formschlüssigen Eingriffs zueinander komplementäre geometrische Formen aufweisen (mit Ausnahme der erwähnten zunehmenden Breite bzw. Winkel bezüglich einen Aufstecken). Die geometrische Formen sind diesbezüglich bevorzugt rechteckig (bzw. quaderförmig) ausgebildet, sie können aber auch andere polygonale Formen aufweisen (wie. Z.B. in Fig. 2 strichliert angedeutet), welche ein Anpressen innerhalb des mechanischen Spiels zulassen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Schneidwerkzeug | 32 | zweiten Stellung |
| 2 | Basiskörper | 33 | Kulisse |
| 3 | Montagesitz | 34 | erster Abstand |
| 4 | Anlagefläche | 35 | zweiten Abstand |
| 5 | Sitzfläche | 36 | Achse |
| 6 | Schneideinsatz | 37 | Mittelachse |
| 7 | Montagebohrung | 38 | Weite |
| 8 | Befestigungsmittel | 39 | erste Begrenzungsfläche |
| 9 | vordere Fläche | 40 | zweite Begrenzungsfläche |
| 10 | hintere Fläche | 41 | Innenfläche |
| 11 | Schneidkante | 42 | Tiefe |
| 12 | erste Montagefläche | 43 | Höhe |
| 13 | erste Ausnehmung | 44 | oberen Fläche |
| 14 | Erhebung | 45 | Deckfläche |
| 15 | erster Endanschlag | 46 | Rückstellfläche |
| 16 | zweiter Endanschlag | 47 | Kanal |
| 17 | erste Stirnfläche | 48 | Mantelfläche |
| 18 | zweite Stirnfläche | P | Anpressdruck |
| 19 | Länge | S | Ebene |
| 20 | Erstreckung | δ | spitzer Winkel |
| 21 | mechanisches Spiel | α | Winkel |
| 22 | zweite Montagefläche | β | Winkel |
| 23 | zweite Ausnehmung | γ | Winkel |
| 24 | Sackloch | | |
| 25 | Achsversatz | | |
| 26 | Schrägbohrung | | |
| 27 | Nut | | |
| 28 | erste Seitenfläche | | |
| 29 | zweite Seitenfläche | | |
| 30 | Breite | | |
| 31 | ersten Stellung | | |

## Patentansprüche

1. Schneidwerkzeug (1), insbesondere Scheibenfräser, wobei das Schneidwerkzeug (1) einen scheibenförmigen Basiskörper (2) aufweist, umfassend;
- zumindest einen über einen Umfang des Basiskörpers (2) angeordneten Montagesitz (3), wobei der Montagesitz (3) eine Anlagefläche (4) und eine Sitzfläche (5) mit einem darin aufgenommenen Schneideinsatz (6) aufweist;
- der Schneideinsatz (6), umfassend:
- eine Montagebohrung (7) zur Aufnahme eines Befestigungsmittels (8); und
- eine vordere Fläche (9) sowie eine gegenüberliegende hintere Fläche (10), wobei die vordere Fläche (9) zumindest eine Schneidkante (11) aufweist und die hintere Fläche (10) zur Anlage an der Anlagefläche (4) ausgebildet ist, und
- eine erste Montagefläche (12), wobei sich die erste Montagefläche (12) zwischen der vorderen Fläche (9) und der hinteren Fläche (10) erstreckt und zur Anlage an der Sitzfläche (5) ausgebildet ist und wobei eine erste Ausnehmung (13) in der ersten Montagefläche (12) ausgebildet ist; und
wobei an dem Montagesitz (3) eine Erhebung (14) an der Sitzfläche (5) ausgebildet ist und die Erhebung (14) zum formschlüssigen Eingriff in die Ausnehmung (13) ausgebildet ist, **dadurch gekennzeichnet, dass**
die erste Ausnehmung (13) einen der vorderen Fläche (9) zugewandten ersten Endanschlag (15) und einen gegenüberliegenden, der hinteren Fläche (10) zugewandten zweiten Endanschlag (16) aufweist; und
dass die Erhebung (14) eine erste Stirnfläche (17) zur Anlage an den ersten Endanschlag (15) und eine gegenüberliegende, zweite Stirnfläche (18) zur Anlage an den zweiten Endanschlag (16) aufweist; und
dass eine Länge (19) der ersten Ausnehmung (13) zwischen dem ersten Endanschlag (15) und dem zweiten Endanschlag (16) größer ist als eine Erstreckung (20) der Erhebung (14) zwischen der ersten Stirnfläche (17) und der zweiten Stirnfläche (18), sodass der Schneideinsatz (6) mittels des ersten und zweiten Endanschlages (15,16) bezüglich der Erhebung (14) ein mechanisches Spiel (21) aufweist, wobei das mechanische Spiel (21) derart dimensioniert ist, dass die hintere Fläche (10) innerhalb des Spiels (21) an die Anlagefläche (4) anpressbar ist.

2. Schneidwerkzeug (1) nach Anspruch 1, **dadurch gekennzeichnet, dass** der Schneideinsatz (6) bezüglich der ersten Montagefläche (12) eine gegenüberliegend angeordnete zweite Montagefläche (22) mit einer zweiten Ausnehmung (23) aufweist, wobei die zweite Montagefläche (22) und die zweite Ausnehmung (23) bezüglich des Schneideinsatzes (6) symmetrisch zu der ersten Montagefläche (12) und der ersten Ausnehmung (13) ausgebildet sind.

3. Schneidwerkzeug (1) nach Anspruch 1 oder 2, **dadurch gekennzeichnet, dass** die Montagebohrung (7) bezüglich der ersten Montagefläche (12) senkrecht ausgebildet ist und dass im Montagesitz (3) ein Sackloch (24) ausgebildet ist, wobei das Sackloch (24) parallel zur Montagebohrung (7) und senkrecht bezüglich der Sitzfläche (5) angeordnet ist und das Sackloch (24) bezüglich der Montagebohrung (7) einen Achsversatz (25) in Richtung der Anlagefläche (4) aufweist.

4. Schneidwerkzeug (1) nach Anspruch 3, **dadurch gekennzeichnet, dass** ein Betrag des Achsversatz (25) einer Differenz zwischen der Länge (19) der Ausnehmung (13) und der Erstreckung (20) der Erhebung (14) entspricht.

5. Schneidwerkzeug (1) nach Anspruch 1 oder 2, **dadurch gekennzeichnet, dass** in der Sitzfläche (5) des Montagesitzes (3) eine Schrägbohrung (26) zur Aufnahme des Befestigungsmittels (8) ausgebildet ist, wobei die Schrägbohrung (26) zur Sitzfläche (5) derart in einem spitzen Winkel angeordnet ist, dass die Schrägbohrung (26) bezüglich ihrer Tiefe ausgehend von der Sitzfläche (5) in Richtung der Anlagefläche (4) geneigt verlaufend ausgebildet ist.

6. Schneidwerkzeug (1) nach einem der vorhergehenden Ansprüche, **dadurch gekennzeichnet, dass** in der Erhebung (14) zumindest eine Nut (27) ausgebildet ist, wobei sich die Nut (27) zwischen der ersten und zweiten Stirnfläche (17, 18) erstreckt.

7. Schneidwerkzeug (1) nach einem der vorhergehenden Ansprüche, **dadurch gekennzeichnet, dass** die Erhebung (14) eine erste Seitenfläche (28) und eine gegenüberliegende zweite Seitenfläche (29) aufweist, wobei sich die erste und zweite Seitenfläche (28,29) zwischen der ersten und zweiten Stirnfläche (17, 18) erstrecken und dass eine Breite (30) zwischen der ersten und zweiten Seitenfläche (28,29) derart ausgewählt ist, dass der Schneideinsatz (6) mittels der Ausnehmung (13) auf die Erhebung (14) aufsteckbar ist und in einem nicht betriebenen Zustand des Schneidwerkzeuges (1) ohne dem Befestigungsmittel (8) vor einem Herausfallen gesichert ist.

8. Schneidwerkzeug (1) nach Anspruch 7, **dadurch gekennzeichnet, dass** die Breite (30) zwischen der ersten und zweiten Seitenfläche (28,29) in zumindest eine der folgenden Richtungen zunehmend ausgebildet ist:
- in Richtung der Sitzfläche (5)
- in Richtung der Anlagefläche (4).

9. Schneidwerkzeug (1) nach einem der vorhergehenden Ansprüche, **dadurch gekennzeichnet, dass** der Schneideinsatz (6) mittels des Befestigungsmittels (8) zwischen einer ersten Stellung (31) und einer zweiten Stellung (32) verstellbar ist, wobei der Schneideinsatz (6) bezüglich des Spiels (21) in der ersten Stellung (31) beweglich ist und in der zweiten Stellung (32) fixierbar ist.

10. Schneidwerkzeug (1) nach Anspruch 9, **dadurch gekennzeichnet, dass** der Schneideinsatz (6) mittels des Befestigungsmittels (8) bei der Verstellung in die zweite Stellung (32) in Richtung der Anlagefläche (4) anpressbar ist.

11. Schneidwerkzeug (1) nach Anspruch 10, **dadurch gekennzeichnet, dass** das Befestigungsmittel (8) eine Kulisse (33) aufweist, wobei der Schneideinsatz (6) in der ersten Stellung (31) bezüglich der Montagebohrung (7) relativ zu dem Befestigungsmittel (8) frei verschiebbar ist und der Schneideinsatz (6) in der zweiten Stellung (32) mittels der Kulisse (33) in Richtung der Anlagefläche (4) anpressbar ist.

12. Schneidwerkzeug (1) nach einem der vorhergehenden Ansprüche, **dadurch gekennzeichnet, dass** ein erster Abstand (34) zwischen dem zweiten Endanschlag (16) und der hinteren Fläche (10) einem zweiten Abstand (35) zwischen der zweiten Stirnfläche (17) und der Anlagefläche (4) entspricht.

13. Schneidwerkzeug (1) nach einem der vorhergehenden Ansprüche, **dadurch gekennzeichnet, dass** die Anlagefläche (4) und die Sitzfläche (5) in einem spitzen Winkel zueinander angeordnet sind, insbesondere in einem Winkel von 89° bis 89,9°.

## Claims

1. A cutting tool (1), in particular a side milling cutter, wherein the cutting tool (1) has a disc-shaped base body (2), comprising:
- at least one mounting seat (3) arranged around a circumference of the base body (2), wherein the mounting seat (3) has a contact surface (4) and a seating surface (5) with a cutting insert (6) received therein;
- the cutting insert (6), comprising:
- a mounting bore (7) for receiving a fastening means (8); and
- a front surface (9) and an opposite rear surface (10), wherein the front surface (9) has at least one cutting edge (11) and the rear surface (10) is configured to abut against the contact surface (4), and
- a first mounting surface (12), wherein the first mounting surface (12) extends between the front surface (9) and the rear surface (10) and is configured to abut against the seating surface (5), and wherein a first recess (13) is formed in the first mounting surface (12); and
wherein an elevation (14) is formed on the mounting seat (3) at the seating surface (5), and the elevation (14) is configured for positive engagement with the recess (13), **characterized in that**
the first recess (13) comprises a first end stop (15) facing the front surface (9) and an opposite second end stop (16) facing the rear surface (10); and
that the elevation (14) has a first end face (17) for abutment against the first end stop (15) and an opposite second end face (18) for abutment against the second end stop (16); and that a length (19) of the first recess (13) between the first end stop (15) and the second end stop (16) is greater than an extension (20) of the elevation (14) between the first end face (17) and the second end face (18), such that the cutting insert (6) has a mechanical clearance (21) relative to the elevation (14) due to the first and second end stops (15, 16), wherein the mechanical clearance (21) is dimensioned such that the rear surface (10) is pressable against the contact surface (4) within the clearance (21).

2. The cutting tool (1) according to claim 1, **characterized in that** the cutting insert (6), relative to the first mounting surface (12), has an oppositely arranged second mounting surface (22) with a second recess (23), wherein the second mounting surface (22) and the second recess (23), relative to the cutting insert (6), are formed to be symmetrical with respect to the first mounting surface (12) and the first recess (13).

3. The cutting tool (1) according to claim 1 or 2, **characterized in that** the mounting bore (7) is formed to be perpendicular with respect to the first mounting surface (12) and that a blind hole (24) is formed in the mounting seat (3), wherein the blind hole (24) is arranged parallel to the mounting bore (7) and perpendicular with respect to the seating surface (5), and the blind hole (24) has an axial offset (25) relative to the mounting bore (7) in the direction of the contact surface (4).

4. The cutting tool (1) according to claim 3, **characterized in that** the amount of the axial offset (25) corresponds to a difference between the length (19) of the recess (13) and the extension (20) of the elevation (14).

5. The cutting tool (1) according to claim 1 or 2, **characterized in that** an angled bore (26) for receiving the fastening means (8) is formed in the seating surface (5) of the mounting seat (3), wherein the angled bore (26) is arranged relative to the seating surface (5) at an acute angle such that the angled bore (26) is formed to extend at an incline with respect to its depth, starting from the seating surface (5) toward the contact surface (4).

6. The cutting tool (1) according to one of the preceding claims, **characterized in that** at least one groove (27) is formed in the elevation (14), wherein the groove (27) extends between the first and second end faces (17, 18).

7. The cutting tool (1) according to one of the preceding claims, **characterized in that** the elevation (14) has a first side surface (28) and an opposite second side surface (29), wherein the first and second side surfaces (28, 29) extend between the first and second end faces (17, 18) and that a width (30) between the first and second side surfaces (28, 29) is selected such that the cutting insert (6) is pluggable onto the elevation (14) by means of the recess (13) and, in a non-operating state of the cutting tool (1), is secured against falling out without the fastening means (8).

8. The cutting tool (1) according to claim 7, **characterized in that** the width (30) between the first and second side surfaces (28, 29) is configured to increase in at least one of the following directions:
- in the direction toward the seating surface (5)
- in the direction toward the contact surface (4).

9. The cutting tool (1) according to one of the preceding claims, **characterized in that** the cutting insert (6) is adjustable by means of the fastening means (8) between a first position (31) and a second position (32), wherein the cutting insert (6) is movable relative to the clearance (21) in the first position (31) and is securable in the second position (32).

10. The cutting tool (1) according to claim 9, **characterized in that** the cutting insert (6) is pressable in the direction of the contact surface (4) by means of the fastening means (8) during the adjustment into the second position (32).

11. The cutting tool (1) according to claim 10, **characterized in that** the fastening means (8) comprises a guide (33), wherein the cutting insert (6) is freely slidable relative to the fastening means (8) with respect to the mounting bore (7) in the first position (31), and the cutting insert (6) is pressable in the direction of the contact surface (4) in the second position (32) by means of the guide (33).

12. The cutting tool (1) according to one of the preceding claims, **characterized in that** a first distance (34) between the second end stop (16) and the rear surface (10) corresponds to a second distance (35) between the second end face (17) and the contact surface (4).

13. The cutting tool (1) according to one of the preceding claims, **characterized in that** the contact surface (4) and the seating surface (5) are arranged at an acute angle to one another, in particular at an angle of 89° to 89.9°.

## Revendications

1. Outil de coupe (1), en particulier fraise disque, dans lequel l'outil de coupe (1) présente un corps de base en forme de disque (2), comprenant ;
- au moins un siège de montage (3) agencé sur une périphérie du corps de base (2), dans lequel le siège de montage (3) présente une surface d'appui (4) et une surface de siège (5) avec un insert de coupe (6) accueilli dans celle-ci ;
- l'insert de coupe (6), comprenant :
- un alésage de montage (7) permettant d'accueillir un moyen de fixation (8) ; et
- une surface avant (9) ainsi qu'une surface arrière (10), dans lequel la surface avant (9) présente au moins un bord de coupe (11) et la surface arrière (10) est conçue pour venir en appui contre la surface d'appui (4), et
- une première surface de montage (12), dans lequel la première surface de montage (12) s'étend entre la surface avant (9) et la surface arrière (10) et est conçue pour s'appuyer contre la surface de siège (5) et dans lequel un premier évidement (13) est formé dans la première surface de montage (12) ; et
dans lequel une protubérance (14) est formée sur la surface de siège (5) au niveau du siège de montage (3) et la protubérance (14) est conçue pour une mise en prise avec verrouillage par complémentarité de forme dans l'évidement (13), **caractérisé en ce que** le premier évidement (13) présente une première butée d'extrémité (15) tournée vers la surface avant (9) et une seconde butée d'extrémité (16) opposée tournée vers la surface arrière (10) ; et
la protubérance (14) présente une première surface frontale (17) permettant un appui contre la première butée d'extrémité (15) et une seconde surface frontale (18) opposée permettant un appui contre la seconde butée d'extrémité (16) ; et **en ce que** une longueur (19) du premier évidement (13) entre la première butée d'extrémité (15) et la seconde butée d'extrémité (16) est supérieure à une étendue (20) de la protubérance (14) entre la première surface frontale (17) et la seconde surface frontale (18), de sorte que l'insert de coupe (6) présente un jeu mécanique (21) par rapport à la protubérance (14) au moyen des première et seconde butées d'extrémité (15, 16), dans lequel le jeu mécanique (21) est dimensionné de telle manière que la surface arrière (10) peut être pressée contre la surface d'appui (4) au sein du jeu (21).

2. Outil de coupe (1) selon la revendication 1, **caractérisé en ce que** l'insert de coupe (6) présente une seconde surface de montage (22) agencée de manière opposée par rapport à la première surface de montage (12) et présentant un second évidement (23), dans lequel la seconde surface de montage (22) et le second évidement (23) sont symétriques à la première surface de montage (12) et au premier évidement (13) par rapport à l'insert de coupe (6).

3. Outil de coupe (1) selon la revendication 1 ou 2, **caractérisé en ce que** l'alésage de montage (7) est réalisé perpendiculairement par rapport à la première surface de montage (12) et **en ce qu'**un trou borgne (24) est réalisé dans le siège de montage (3), dans lequel le trou borgne (24) est agencé parallèlement à l'alésage de montage (7) et perpendiculairement par rapport à la surface de siège (5) et le trou borgne (24) présente un décalage axial (25) par rapport à l'alésage de montage (7) dans la direction de la surface d'appui (4).

4. Outil de coupe (1) selon la revendication 3, **caractérisé en ce qu'**une valeur du décalage axial (25) correspond à une différence entre la longueur (19) de l'évidement (13) et l'étendue (20) de la protubérance (14).

5. Outil de coupe (1) selon la revendication 1 ou 2, **caractérisé en ce qu'**un alésage incliné (26) permettant d'accueillir le moyen de fixation (8) est formé dans la surface de siège (5) du siège de montage (3), dans lequel l'alésage incliné (26) est agencé selon un angle aigu par rapport à la surface de siège (5) de telle manière que l'alésage incliné (26) s'étend de manière inclinée par rapport à sa profondeur à partir de la surface de siège (5) en direction de la surface d'appui (4).

6. Outil de coupe (1) selon l'une quelconque des revendications précédentes, **caractérisé en ce qu'**au moins une rainure (27) est formée dans la protubérance (14), dans lequel la rainure (27) s'étend entre les première et seconde surface frontale (17, 18).

7. Outil de coupe (1) selon l'une quelconque des revendications précédentes, **caractérisé en ce que** la protubérance (14) présente une première surface latérale (28) et une seconde surface latérale (29) opposée, dans lequel les première et seconde surfaces latérales (28, 29) s'étendent entre les première et seconde surfaces frontales (17, 18) et **en ce qu'**une largeur (30) entre les première et seconde surfaces latérales (28, 29) est sélectionnée de telle manière que l'insert de coupe (6) peut être enfiché sur la protubérance (14) au moyen de l'évidement (13) et est protégé contre la chute dans un état de non utilisation de l'outil de coupe (1) sans le moyen de fixation (8).

8. Outil de coupe (1) selon la revendication 7, **caractérisé en ce que** la largeur (30) entre les première et seconde surfaces latérales (28, 29) est formée de manière croissante dans au moins une des directions ci-dessous :
- en direction de la surface de siège (5)
- en direction de la surface d'appui (4).

9. Outil de coupe (1) selon l'une quelconque des revendications précédentes, **caractérisé en ce que** l'insert de coupe (6) peut être réglé au moyen du moyen de fixation (8) entre une première position (31) et une seconde position (32), dans lequel l'insert de coupe (6) est mobile par rapport au jeu (21) dans la première position (31) et peut être immobilisé dans la seconde position (32).

10. Outil de coupe (1) selon la revendication 9, **caractérisé en ce que** l'insert de coupe (6) peut être pressé en direction de la surface d'appui (4) grâce au moyen de fixation (8) lors du réglage dans la seconde position (32).

11. Outil de coupe (1) selon la revendication 10, **caractérisé en ce que** le moyen de fixation (8) présente une coulisse (33), dans lequel l'insert de coupe (6) dans la première position (31) peut être déplacé librement par rapport au trou de montage (7) et par rapport au moyen de fixation (8) et l'insert de coupe (6) dans la seconde position (32) peut être pressé au moyen de la coulisse (33) en direction de la surface d'appui (4).

12. Outil de coupe (1) selon l'une quelconque des revendications précédentes, **caractérisé en ce qu'**une première distance (34) entre la seconde butée d'extrémité (16) et la surface arrière (10) correspond à une seconde distance (35) entre la seconde surface frontale (17) et la surface d'appui (4).

13. Outil de coupe (1) selon l'une quelconque des revendications précédentes, **caractérisé en ce que** la surface d'appui (4) et la surface de siège (5) sont agencées selon un angle aigu l'une par rapport à l'autre, en particulier selon un angle compris entre 89° et 89,9°.
